## Europäisches Patentamt
## European Patent Office
## Office européen des brevets

(11) Numéro de publication: **0 357 512**
**A1**

(12) **DEMANDE DE BREVET EUROPEEN**

(21) Numéro de dépôt: **89402380.3**

(22) Date de dépôt: **31.08.89**

(51) Int. Cl.5: **H 02 G 3/28**

(30) Priorité: **02.09.88 FR 8811523**

(43) Date de publication de la demande:
**07.03.90  Bulletin  90/10**

(84) Etats contractants désignés:
**AT BE CH DE ES GB GR IT LI LU NL SE**

(71) Demandeur: **Breton, Thierry Jacques Lucien**
**44 rue de Fleurus**
**F-75006 Paris  (FR)**

(72) Inventeur: **Breton, Thierry Jacques Lucien**
**44 rue de Fleurus**
**F-75006 Paris  (FR)**

(74) Mandataire: **Durand, Yves Armand Louis et al**
**CABINET WEINSTEIN 20, Avenue de Friedland**
**F-75008 Paris  (FR)**

(54) **Dalle de plancher pour un bâtiment quelconque et bâtiment équipé d'au moins une telle dalle.**

(57) La présente invention concerne une dalle de plancher pour un bâtiment quelconque ainsi qu'un bâtiment équipé d'au moins une telle dalle.

Cette dalle de plancher (1) comporte un réseau de câbles ou autres éléments de transmission d'énergie logés dans des rainures obturables par des couvercles juxtaposés (4), ces rainures étant pratiquées dans la face supérieure (2) de la dalle (1) et étant réparties dans celle-ci à la manière d'un quadrillage orthogonal pour assurer la desserte des locaux aménagés sur cette dalle à l'aide de cloisons mobiles (15), et ce quel que soit le nombre, la surface, et l'agencement de ces locaux.

La dalle de plancher selon cette invention peut équiper des immeubles comportant un nombre quelconque d'étages.

FIG. 1

EP 0 357 512 A1

## Description

## Dalle de plancher pour un bâtiment quelconque et bâtiment équipé d'au moins une telle dalle.

La présente invention a essentiellement pour objet une dalle de plancher, en béton par exemple, pour un bâtiment quelconque.

Elle vise également un bâtiment, tel que notamment un immeuble à plusieurs étages et dont chaque étage comporte une telle dalle de plancher.

Il est connu depuis longtemps, dans les immeubles de construction moderne, d'aménager des faux planchers ou des faux plafonds dans lesquels on fait passer des réseaux de câbles pour, par exemple, le téléphone, la transmission de données, l'alimentation en courant, etc... . Ainsi, toute la filerie demeure en quelque sorte en attente et prête à assurer un raccordement quelconque.

De telles constructions sont habituellement qualifiées d'immeubles "intelligents", car elles permettent un accès commode aux différents réseaux de transport de données ou de télécommunications.

Toutefois, la solution faux planchers ou faux plafonds coûte fort cher et de plus, dans des immeubles où il faut constamment modifier l'agencement des locaux généralement réalisés à l'aide de cloisons mobiles, on n'arrive pas d'une façon quasi-instantanée et individualisée à faire les raccordements désirés entre la filerie et les locaux nouvellement créés par les cloisons.

La présente invention a pour but de remédier à ces inconvénients en proposant une dalle de plancher peu coûteuse et permettant un raccordement quasi-immédiat et individualisé quel que soit l'agencement désiré des locaux sur cette dalle.

A cet effet, l'invention a pour objet une dalle de plancher pour un bâtiment quelconque, tel que par exemple un immeuble à plusieurs étages et à laquelle est associé un réseau de câbles, conduites ou analogues destinés à desservir le bâtiment à la demande, caractérisée en ce que ledit réseau est logé dans des rainures obturables pratiquées dans la face supérieure de la dalle et réparties dans celle-ci à la manière d'un quadrillage pour assurer la desserte des locaux aménagés sur cette dalle quel que soit leur nombre, leur surface ou leur agencement.

Selon une autre caractéristique de cette invention, chaque rainure est obturable par une succession de couvercles juxtaposés et amovibles munis de moyens permettant leur préhension et le raccordement du réseau à un élément quelconque.

On précisera encore ici que chaque rainure est intérieurement revêtue d'un profilé ou analogue sur lequel s'emboîtent les couvercles précités.

Suivant un mode de réalisation préféré, chaque couvercle comporte au moins un orifice pour sa préhension et au moins un autre orifice dans lequel peut être éventuellement clippé un organe de raccordement.

Chaque couvercle présente de préférence en section transversale sensiblement la forme d'un U dont l'extrémité libre des branches peut venir en butée sur des nervures faisant saillie à l'intérieur du profilé.

Le profilé peut présenter une structure telle qu'il forme au moins deux logements pour le réseau de câbles, conduites ou analogues.

Selon encore une autre caractéristique de l'invention, les rainures sont réparties dans la dalle suivant un quadrillage orthogonal.

Suivant une autre caractéristique, le réseau de câbles ou conduites est raccordé par l'intermédiaire d'un ceinturage à des locaux techniques prévus sur le pourtour de la dalle, à un endroit approprié.

L'invention vise également un bâtiment et notamment un immeuble à plusieurs étages, caractérisé en ce que chaque étage comporte une dalle de plancher répondant aux caractéristiques ci-dessus.

Mais d'autres avantages et caractéristiques de l'invention apparaîtront mieux dans la description détaillée qui suit et se réfère aux dessins annexés, donnés uniquement à titre d'exemple, et dans lesquels :

La figure 1 est une vue schématique et de dessus, moquette en partie enlevée, d'une dalle de plancher conforme aux principes de l'invention et matérialisant par exemple un étage d'immeuble ;

La figure 2 est une vue en coupe suivant la ligne II-II de la figure 1 ; et

La figure 3 est une vue en coupe suivant la ligne III-III de la figure 1.

Selon un exemple de réalisation, et en se reportant aux dessins annexés, une dalle de plancher 1 conforme à cette invention comporte, dans sa face supérieure 2, une multiplicité de rainures 3 réparties dans la dalle à la manière d'un quadrillage qui peut être orthogonal ou non.

Chaque rainure 3 est obturable par une succession de couvercles juxtaposés et amovibles 4 qui peuvent être en tout matériau rigide approprié.

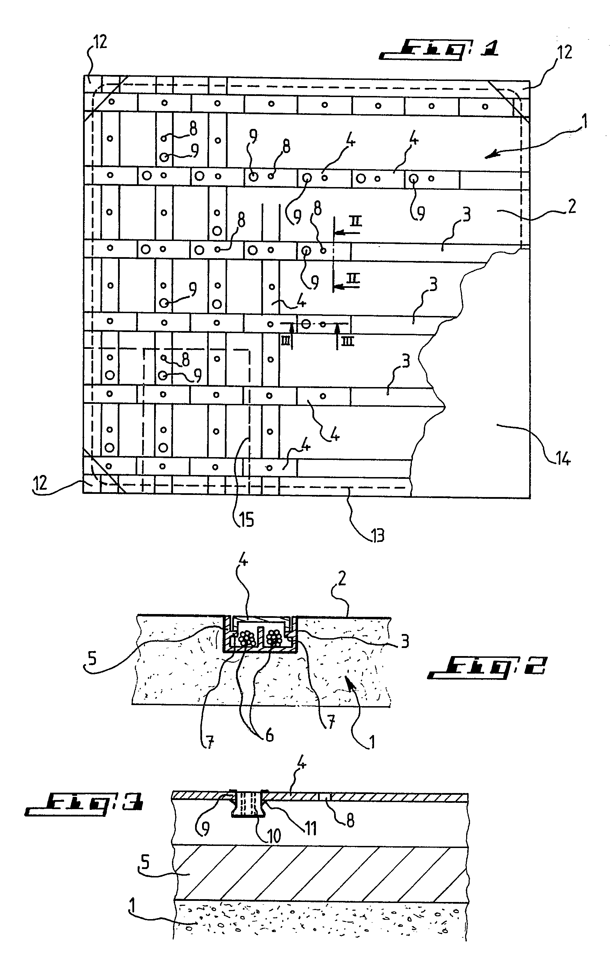

Comme on le voit clairement sur la figure 2, chaque rainure 3, peut présenter, en section transversale, une forme rectangulaire, étant bien entendu que toutes autres formes pourraient être prévues sans sortir du cadre de l'invention.

Dans chaque rainure 3 est agencé un profilé 5 qui épouse le contour intérieur de la rainure et reçoit le ou les réseaux de câbles ou la filerie 6.

Le profilé 5 peut constituer par exemple un double rail, comme cela est représenté sur la figure 2, mais on pourrait parfaitement imaginer une autre forme de profilé, en fonction des réseaux de câbles à intégrer à la dalle, c'est-à-dire en fonction des divers équipements à alimenter dans l'immeuble.

Les ailes des profilés 5 logés dans les rainures orthogonales 3 de la dalle 1 pourront comporter des nervures 7 sur lesquelles viendront en butée les couvercles juxtaposés 4, lesquels auront ainsi une bonne stabilité tout en demeurant toujours en affleurement avec la face supérieure 2 de la dalle 1.

Chaque couvercle 4 comporte au moins un orifice 8 permettant le passage d'au moins un doigt pour la préhension du couvercle, c'est-à-dire pour ouvrir ou fermer une portion de rainure 3.

Chaque couvercle 4 peut également comporter au moins un autre orifice 9 qui est plus grand que l'orifice 8.

Comme on le verra plus loin en détail, cet orifice 9 peut permettre le passage d'un ou plusieurs câbles tirés de la filerie 6 afin de permettre un raccordement avec un élément quelconque.

Comme on le voit bien sur la figure 3, on peut clipper dans l'orifice 9 un organe de raccordement, tel que par exemple une prise de courant 10, cette prise 10 comportant par exemple une lèvre annulaire 11 permettant le clippage de ladite prise sur le couvercle 4.

Suivant l'exemple de réalisation représenté sur la figure 2, chaque couvercle 4 présente en section transversale sensiblement la forme d'un U, dont l'extrémité libre des branches peut prendre appui sur les nervures 7 faisant saillie à l'intérieur du profilé 5.

On peut bien entendu prévoir, sans sortir du cadre de l'invention, une autre forme pour les couvercles 4, cela étant fonction de la forme de la rainure 3 et/ou du profilé 5.

Le ou les réseaux 6 de câbles dans les rainures 3 peuvent être raccordés, comme on le voit sur la figure 1, à des locaux techniques montrés schématiquement en 12 et situés par exemple aux quatre angles de l'étage matérialisé par la dalle de plancher 1. Ces locaux techniques 12 pourraient également être prévus à un endroit quelconque sur les côtés de l'étage. On a montré schématiquement en 13 un ceinturage sur le pourtour de l'étage ou de la dalle 1 et permettant le raccordement de la filerie 6 dans les rainures 3 aux locaux techniques 12.

Pour une meilleure compréhension de l'invention, on expliquera ci-après sa mise en oeuvre et ses avantages.

On supposera tout d'abord, comme cela est fréquemment le cas, que la face supérieure 2 de la dalle de plancher 1 constituant par exemple l'étage d'un immeuble est recouverte d'une moquette 14.

A l'aide de cloisons mobiles matérialisées en 15 sur la figure 1, on créera des locaux suivant un agencement quelconque désiré par le client.

Ceci étant fait, il conviendra d'alimenter les divers équipements de ces locaux, et pour cela, on pratiquera des découpes dans la moquette 14, et on sera toujours certain de trouver plusieurs couvercles tels que 4 permettant d'avoir accès, comme on le comprend, au réseau de câbles 6.

Il sera alors aisé de soulever un ou plusieurs de ces couvercles et de faire le raccordement en utilisant par exemple des prises telles que 10.

On a donc réalisé suivant l'invention une dalle de plancher peu coûteuse et permettant d'effectuer un raccordement à quelque endroit que ce soit du plancher de l'étage, en fonction de l'aménagement de cet étage avec des cloisons mobiles et démontables.

Bien entendu, l'invention n'est nullement limitée au mode de réalisation décrit et illustré qui n'a été donné qu'à titre d'exemple.

C'est ainsi que la forme des rainures, des profilés et des couvercles, la géométrie de quadrillage des rainures et les matériaux entrant en jeu dans l'aménagement de la dalle, en béton par exemple, peuvent être quelconques sans sortir du cadre de l'invention.

C'est dire que l'invention comprend tous les équivalents techniques des moyens décrits ainsi que leurs combinaisons si celles-ci sont effectuées suivant son esprit.

**Revendications**

1. Dalle de plancher pour un bâtiment quelconque, tel que par exemple un immeuble à plusieurs étages et à laquelle est associé un réseau de câbles, conduites ou analogues destinés à desservir le bâtiment à la demande, caractérisée en ce que ledit réseau (6) est logé dans des rainures obturables (9) pratiquées dans la face supérieure (2) de la dalle (1) et réparties dans celle-ci à la manière d'un quadrillage pour assurer la desserte des locaux aménagés sur cette dalle, quel que soit leur nombre, leur surface ou leur agencement.

2. Dalle selon la revendication 1, caractérisée en ce que chaque rainure (3) est obturable par une succession de couvercles juxtaposés et amovibles (4) munis de moyens permettant leur préhension et le raccordement du réseau (6) à un élément quelconque.

3. Dalle selon la revendication 1 ou 2, caractérisée en ce que chaque rainure (3) est intérieurement revêtue d'un profilé ou analogue (5) sur lequel s'emboîtent les couvercles précités (4).

4. Dalle selon la revendication 2 ou 3, caractérisée en ce que chaque couvercle (4) comporte au moins un orifice (8) pour sa préhension et au moins un autre orifice (9) dans lequel peut être éventuellement clippé un organe de raccordement (10).

5. Dalle selon l'une des revendications 2 à 4, caractérisée en ce que chaque couvercle (4) présente en section transversale sensiblement la forme d'un U dont l'extrémité libre des branches peut venir en butée sur des nervures (7) faisant saillie à l'intérieur du profilé (5).

6. Dalle suivant la revendication 2 ou 4, caractérisée en ce que le profilé (5) a une structure telle qu'il forme au moins deux logements pour le réseau (6) de câbles, conduites ou analogues.

7. Dalle selon l'une des revendications précédentes, caractérisée en ce que les rainures précitées (3) sont réparties dans la dalle (1) suivant un quadrillage orthogonal.

8. Dalle selon l'une des revendications précédentes, caractérisée en ce que le réseau (6) de câbles ou conduites est raccordé par l'intermédiaire d'un ceinturage, à des locaux techniques prévus sur le pourtour de la dalle (1).

9. Bâtiment, tel que notamment immeuble à plusieurs étages, caractérisé en ce que chaque étage comporte une dalle de plancher selon l'une des revendications 1 à 8.

Fig. 1

Fig. 2

Fig. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-040284 (ANDOLFI) <br> * page 6, ligne 18 - page 7, ligne 27; revendication 1; figures 1, 3, 4 * <br> --- | 1, 2, 4, 8 | H02G3/28 |
| A | DE-A-2407180 (FA. ALBERT ACKERMANN) <br> * page 5, ligne 12 - page 8, ligne 16; figures 1-4a * <br> ----- | 1-4, 6 | |

DOMAINES TECHNIQUES
RECHERCHES (Int. Cl.5 )

H02G
E04F

Le présent rapport a été établi pour toutes les revendications

| Lieu de la recherche | Date d'achèvement de la recherche | Examinateur |
|---|---|---|
| LA HAYE | 10 OCTOBRE 1989 | RIEUTORT A.S. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant